# EUROPÄISCHE PATENTSCHRIFT

(11) **EP 2 164 720 B1**
(45) Veröffentlichungstag und Bekanntmachung des Hinweises auf die Patenterteilung: **14.12.2011**
(21) Anmeldenummer: 08773875.3
(22) Anmeldetag: 04.07.2008
(51) Int. Cl.: B60J 5/10, E05D 15/28, E05D 3/06

(54) **FAHRZEUG MIT MINDESTENS EINER HECKTÜR**
VEHICLE HAVING AT LEAST ONE TAILGATE
VEHICULE AVEC AU MOINS UN HAYON

(30) Priorität: 17.07.2007 DE 102007033281
(43) Veröffentlichungstag der Anmeldung: 24.03.2010
(73) Patentinhaber: Cadea Gesellschaft Für Anwendung Und Realisierung Computerunterstützter Systeme Mbh, 82223 Eichenau (DE)
(72) Erfinder: ERTL, Harald, 82223 Eichenau (DE)
(74) Vertreter: Grünecker, Kinkeldey, Stockmair & Schwanhäusser
(86) Internationale Anmeldenummer: PCT/EP2008/005498
(87) Internationale Veröffentlichungsnummer: WO 2009/010202

(56) Entgegenhaltungen:
- DE-A1-102004 042 808
- DE-A1-102005 026 772
- US-A1- 2006 152 029
- US-A1- 2008 109 995

## Beschreibung

Die Erfindung betrifft ein Fahrzeug mit mindestens einer Hecktür, die mittels einer Aufhängung an dem Fahrzeug befestigt ist.

Ein ähnliches Fahrzeug bzw. eine ähnliche Aufhängung für eine Fahrzeugseitentür ist aus der DE 10 2004 042 808 A1 bekannt. Die dort beschriebene Aufhängung weist ein Knickarmsystem mit mindestens zwei über ein Gelenk miteinander verbundenen biegesteifen Knickarmen auf, von denen ein erster Knickarm über ein Gelenk mit einem am Karosserierahmen befestigten Träger und ein zweiter Knickarm mit seinem freien Ende über ein Gelenk mit einem an der Tür befestigten Tragelement verbunden ist. Dem Knickarmsystem ist ein Getriebezug mit Übersetzungselementen zum parallelen Bewegen der Tür zwischen einer Schließstellung und einer vorderen oder rückwärtigen Öffnungsstellung zugeordnet. Mit dieser Aufhängung wird die Tür beim Öffnen erst kurzzeitig vom Fahrzeug wegbewegt und dann parallel zur Seite des Fahrzeugs entlanggeführt. Durch die Aufhängung ist also nur ein paralleles Verschieben der Fahrzeugtür möglich. In machen Fällen, beispielsweise bei Hecktüren von Fahrzeugen oder auch bei Fahrzeugen mit kurzem Heck, deren Seitentüren nach hinten verschoben werden, also bei solchen Fahrzeugen, bei welchen die Türen im geöffneten Zustand weit seitlich oder nach hinten über das Fahrzeug hinaus ragen würden, ist dieses parallele Verschieben unerwünscht.

DE 102 005 026 772 offenbart eine Hecktürmechanik wobei die Hecktür in der Offenstellung zu einer Seite des Fahrzeuges angeordnet ist.

Es ist daher die Aufgabe der vorliegenden Erfindung, ein Fahrzeug der eingangs genannten Art bereitzustellen, das eine verbesserte Ausgestaltung der Türaufhängung bzw. Türöffnung, vor allem für Hecktüren, aufweist.

Hierzu ist erfindungsgemäß vorgesehen, dass das Fahrzeug mindestens eine eine Türebene definierende Hecktür aufweist, die über mindestens ein Mehrfachschamier mit mindestens drei zueinander versetzten Schwenkachsen und mindestens zwei paarweise schwenkbar miteinander verbundenen Scharnierarmen, von denen ein erster Scharnierarm schwenkbar mit der Fahrzeugkarosserie und ein zweiter Scharnierarm schwenkbar mit der Hecktür verbunden ist, an der Fahrzeugkarosserie angelenkt ist, wobei dem Mehrfachschamier ein die Schamierbewegung der Scharnierarme in den Schwenkachsen steuernder Getriebezug zugeordnet ist, wodurch die Türebene bei der Überführung der Hecktür von einer Schließstellung, in der die Hecktür eine Schließebene aufspannt, in eine Offenstellung, in der die Hecktür eine Öffnungsebene aufspannt, auf einer vorbestimmten Bewegungsbahn bewegt wird, die Bewegungsbahn der Türebene rotatorische und translatorische Komponenten aufweist und die Schließebene mit der Öffnungsebene einen Winkel im Bereich von 70° bis 110°, bevorzugt etwa 90°, einschließt.

Dadurch führt die Hecktür beim Öffnen nicht nur eine parallele Bewegung durch, sondern wird auch verschwenkt. Die geöffnete Hecktür ragt dadurch nicht mehr weit über das Fahrzeug hinaus, sondern ist seitlich parallel zur Fahrzeugseite angeordnet. Das Fahrzeug weist dann eine große Beladeöffnung auf.

Eine Variante sieht vor, dass die Länge der Scharnierarme so festgelegt ist, dass die Hecktüre in der Offenstellung mit seitlichem Abstand benachbart zu einer Seite des Fahrzeugs angeordnet ist. Die Hecktüre ist in der Offenstellung komplett neben dem Fahrzeug angeordnet, dadurch ist der Blick von hinten auf das Fahrzeug frei. Schlussleuchten, Wamblinklicht, Blinker und andere Lichter werden durch die geöffnete Hecktüre somit nicht verdeckt.

Eine bevorzugte Ausbildung sieht vor, dass die Hecktür in der Offenstellung etwa bis zur Hälfte der Türbreite neben dem Fahrzeug angeordnet ist. Dadurch wird die Öffnungskurve bzw. Bewegungsbahn der Türebene flacher. Sowohl beim Öffnen der Hecktüre als auch in der Offenstellung der Hecktüre ist der Platzbedarf hinten, hinter dem Fahrzeug, geringer.

In einer zweckmäßigen Ausführungsform kann der erste Scharnierarm an einer ersten Schwenkachse mit der Fahrzeugkarosserie verbunden sein und die Länge des ersten Scharnierarms mindestens der Tiefe der Hecktür entsprechen. Dadurch ist ein einfaches Herausbewegen der Hecktüre aus der Türebene möglich. In der Offenstellung kann die Hecktüre einfach seitlich neben dem Fahrzeug angeordnet sein.

In einer weiteren zweckmäßigen Ausführungsform kann vorgesehen sein, dass der zweite Scharnierarm an einer zweiten Schwenkachse mit einem starren Träger der Hecktür verbunden ist und der Abstand zwischen der zweiten Schwenkachse und der Verbindung des ersten Schamierarms mit der Fahrzeugkarosserie etwa 2/3 der Breite der Hecktüre entspricht. Somit kann zum Einen sichergestellt werden, dass die Hecktür in der Offenstellung mit ausreichend seitlichem Abstand zur Seite des Fahrzeugs angeordnet ist, zum Anderen wird dadurch das auf das Mehrfachschamier wirkende Moment geringer.

In einer weiteren Variante kann der zweite Scharnierarm länger sein als der erste Scharnierarm. Somit wird ermöglicht, dass die Hecktüre in der Offenstellung seitlich neben dem Fahrzeug angeordnet ist und nicht zu weit nach hinten über das Fahrzeugheck hinausragt. Durch eine Veränderung der Länge des zweiten Scharnierarms kann der seitliche Abstand der Hecktüre zum Fahrzeug variiert werden.

Zweckmäßigerweise ist der Getriebezug so ausgebildet, dass die Übersetzung zwischen dem zweiten Scharnierarm und dem starren Träger der Hecktür in Bezug auf die Übersetzung zwischen der Fahrzeugkarosserie und dem ersten Scharnierarm und in Bezug auf die Übersetzung zwischen dem ersten Scharnierarm und dem zweiten Scharnierarm negativ ist. Beim Öffnen der Hecktür nimmt daher der Drehwinkel zwischen dem starren Träger und dem zweiten Scharnierarm ab, während die Drehwinkel zwischen der Fahrzeugkarosserie und dem ersten Scharnierarm sowie zwischen dem ersten Scharnierarm und dem zweiten Scharnierarm zunehmen. Dadurch wird der starre Träger beim Öffnen der Hecktür in entgegengesetzter Richtung zu den beiden Schamierarmen gedreht. Die Hecktür wird so neben das Fahrzeug bewegt, dass sie in der Offenstellung parallel zur Fahrzeugseite angeordnet ist. Es ist leichter möglich, den seitlichen Abstand zwischen der Befestigung des Mehrfachschamiers an der Fahrzeugkarosserie und der Position der Hecktür im geöffneten Zustand einzustellen.

In einer weiteren vorteilhaften Ausführungsform kann vorgesehen werden, dass der Getriebezug so ausgebildet ist, dass die Übersetzung zwischen der Fahrzeugkarosserie und dem ersten Scharnierarm genau der Übersetzung zwischen dem ersten Scharnierarm und dem zweiten Scharnierarm und genau dem Betrag der Übersetzung zwischen dem zweiten Scharnierarm und dem starren Träger der Hecktür entspricht. Somit wird der erste Scharnierarm immer um den gleichen Winkel verstellt wie der zweite Scharnierarm, wohingegen der starre Träger der Hecktür um den gleichen Winkel, aber in entgegengesetzter Drehrichtung verstellt wird. Dadurch kann der Getriebezug sehr einfach ausgebildet sein.

Bevorzugterweise beträgt in der Offenstellung der Hecktür ein zwischen der Fahrzeugkarosserie und dem ersten Scharnierarm aufgespannter Winkel α' etwa 90°, ein zwischen der Verlängerung des ersten Schamierarms und dem zweiten Scharnierarm aufgespannter Winkel β' etwa 90° und ein zwischen der Verlängerung des zweiten Schamierarms und dem starren Träger der Fahrzeugkarosserie aufgespannter Winkel γ' etwa 0°. Durch diese geeignete Auswahl der Winkel in der Offenstellung wird auf einfache Weise erreicht, dass die Hecktür in der Offenstellung parallel zur Seite des Fahrzeugs angeordnet ist und mit der Schließebene in etwa einen 90°-Winkel einschließt. Dadurch, dass die Öffnungswinkel das gleiche Übersetzungsvemältnis bzw. den gleichen Betrag des Übersetzungsverhältnisses haben, kann der Getriebezug einfach ausgebildet sein. Bevorzugt kann der Getriebezug durch Zahnriemenverbindungen ausgebildet sein. Dadurch wird eine schlupffreie Verbindung mit geringer Reibung und geringer Geräuschentwicklung ermöglicht.

Es kann aber auch vorgesehen werden, dass der Getriebezug Zahnradübersetzungen und Zahnriemenverbindungen aufweist. Durch die Zahnradübersetzungen wird eine hohe Belastbarkeit und ein geringer Platzbedarf ermöglicht.

In einer weiteren Ausgestaltung kann die Hecktür über zwei Mehrfachschamiere mit zugeordneten Getriebezügen mit der Fahrzeugkarosserie verbunden sein. Damit können größere Lasten aufgenommen werden, was besonders bei großen und schweren Hecktüren vorteilhaft ist.

Zweckmäßigerweise kann dem mindestens einen Mehrfachschamier mit dem Getriebezug mindestens ein Motor zugeordnet sein. Die Hecktür kann dann über den Motor geöffnet und geschlossen werden, es ist keine Kraftaufwendung mehr nötig.

Im Folgenden werden Ausführungsformen der Erfindung anhand einer Zeichnung näher erläutert. Es zeigen:
- Fig. 1: schematische Darstellung einer Hecktür in verschiedenen Positionen,
- Fig. 2: Ausführungsform eines Mehrfachschamiers mit zugeordnetem Getriebezug,
- Fig. 3: perspektivische Darstellung von zwei übereinander angeordneten Mehrfachscharnieren, die an der Fahrzeugkarosserie befestigt sind und
- Fig. 4: Hecktür mit zwei erfindungsgemäßen Mehrfachscharnieren.

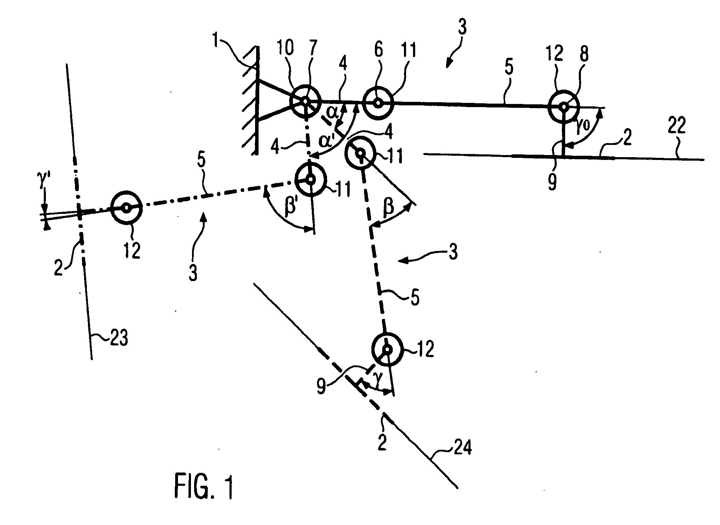

Fig. 1 zeigt eine schematische Darstellung einer an einer Fahrzeugkarosserie 1 befestigten Hecktür 2 in verschiedenen Positionen. Die Hecktür 2 ist über ein Mehrfachschamier 3 an der Fahrzeugkarosserie 1 befestigt. Durch die Hecktür 2 wird eine Türebene 24 definiert. In der mit durchgezogenen Linien gezeichneten Darstellung ist die Hecktür 2 geschlossen und liegt in einer Schließebene 22. Die Türebene 24 stimmt dann mit der Schließebene 22 überein. In der Darstellung mit gestrichelten Linien befindet sich die Hecktür 2 in einer Zwischenposition während des Öffnungsvorgangs. Die Türebene 24 schließt mit der Schließebene 22 einen Winkel ein. Die mit Strichpunkt-Linien gezeichnete Darstellung zeigt die Hecktür 2 in einer vollständig geöffneten Position, in der die Hecktür 2 in einer Öffnungsebene 23 liegt. Die Türebene 24 stimmt in dieser Position also mit der Öffnungsebene 23 überein.

Das Mehrfachscharnier 3 umfasst einen ersten Scharnierarm 4 und einen zweiten Scharnierarm 5, die an einer Schwenkachse 6 drehbar miteinander verbunden sind. Der erste Scharnierarm 4 ist an seinem freien Ende an einer Schwenkachse 7 mit der Fahrzeugkarosserie 1 drehbar verbunden. Der zweite Scharnierarm 5 ist an seinem freien Ende an einer Schwenkachse 8 mit einem an der Hecktür 2 befestigten starren Träger 9 drehbar verbunden. Es wäre aber auch denkbar, den zweiten Scharnierarm 5 über eine starre Verbindung direkt an der Hecktür 2 zu befestigen.

Den Schwenkachsen 6, 7, 8 sind Getriebeelemente 10, 11, 12 zugeordnet, die einen Getriebezug ausbilden. Wird die Hecktür 2 aus der Schließposition in die Öffnungsposition überführt, so wird die Türebene 24 durch den Getriebezug auf einer vorbestimmten Bewegungsbahn bewegt. Die Getriebeelemente 10, 11, 12 sind kinematisch miteinander verbunden, so dass die Bewegungsbahn der Türebene 24 stets gleichbleibend ist. Die Bewegungsbahnen der einzelnen Komponenten des Mehrfachschamiers 3, und damit die Bewegungsbahn der Türebene 24, werden über die Übersetzungen der einzelnen Getriebeelemente 10, 11, 12 eingestellt.

Da die Hecktür 2 durch eine Kombination aus Drehung und Verschiebung von der Schließstellung in die Offenstellung überführt wird, spannen die Schließebene 22 und die Öffnungsebene 23 einen Winkel auf. Dieser Winkel liegt im Bereich von 70° bis 110° und beträgt vorzugsweise 90°. Die Hecktür 2 wird also beim Öffnen nicht nur lediglich parallel verschoben, sondern auch verschwenkt.

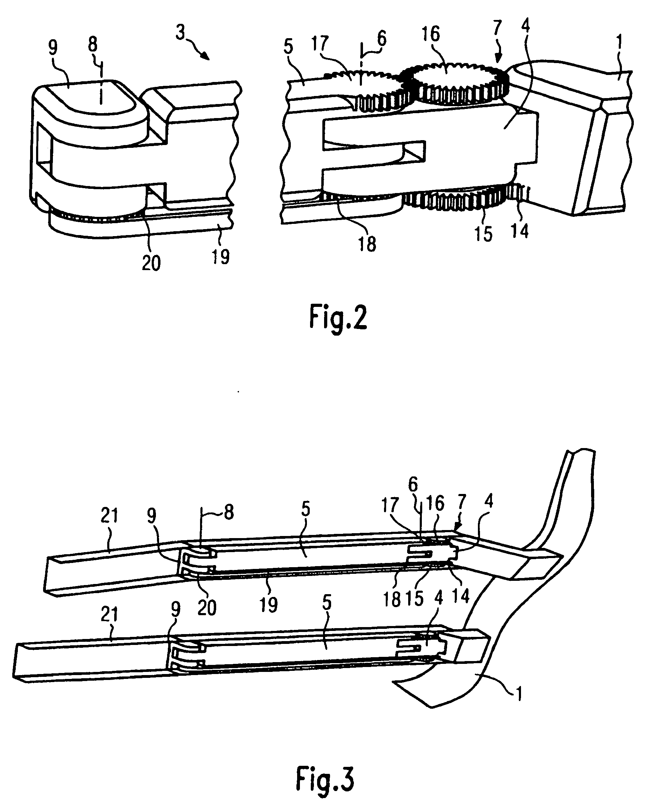

Fig. 2 zeigt eine vergrößerte perspektivische Ansicht des Mehrfachschamiers 3, wobei der zweite Scharnierarm 5 nicht in voller Länge dargestellt ist.

Der erste Scharnierarm 4 ist an der Schwenkachse 7 drehbar in der Fahrzeugkarosserie 1 gelagert. Dazu ist der Fahrzeugkarosserie 1 an der Schwenkachse 7 eine Verzahnung 14 zugeordnet. An dem Scharnierarm 4 ist ein Zahnrad 15 angebracht, das in die Verzahnung 14 der Fahrzeugkarosserie 1 eingreift. Die Verzahnung 14 und das Zahnrad 15 bilden das Getriebeelement 10 aus.

Der erste Scharnierarm 4 und der zweite Scharnierarm 5 sind an der Schwenkachse 6 drehbar miteinander gelagert. An dieser Schwenkachse 6 ist das Getriebeelement 11 angeordnet. Das Getriebeelement 11 umfasst ein an dem ersten Scharnierarm 4 angeordnetes Zahnrad 16 und eine an dem zweiten Scharnierarm 5 angeordnete Verzahnung 17, wobei das Zahnrad 16 und die Verzahnung 17 ineinander eingreifen und Bewegungen des einen Schamierarms 4; 5 auf den jeweils anderen Scharnierarm 5; 4 übertragen.

An seinem anderen Ende ist der zweite Scharnierarm 5 an einer weiteren Schwenkachse 8 an dem starren Träger 9 der Hecktüre 2 drehbar gelagert. Der Schwenkachse 8 ist ein weiteres Getriebeelement 12 zugeordnet. Das Getriebeelement 12 umfasst ein an dem zweiten Scharnierarm 5 angeordnetes Zahnrad 18, das über einen Zahnriemen 19 mit einem an dem starren Träger 9 angeordneten Zahnrad 20 verbunden ist, so dass der zweite Scharnierarm 5 um den starren Träger 9 verschwenkt werden kann.

Fig. 3 zeigt eine perspektivische Darstellung von zwei übereinander angeordneten Mehrfachschamieren 3, in der der zweite Scharnierarm 5 in voller Länge dargestellt ist. Der erste Scharnierarm 4 ist an einem Ende mit der Fahrzeugkarosserie 1 verbunden, der zweite Scharnierarm 5 ist an einem Ende mit dem starren Träger 9 verbunden, der an einem der Hecktüre 2 zugeordneten Aufnahmeschacht 21 befestigt ist. Wie bereits beschrieben, ist der Getriebezug an der ersten Schwenkachse 7 durch eine der Fahrzeugkarosserie 1 zugeordnete Verzahnung 14 und ein dem ersten Scharnierarm 4 zugeordnetes Zahnrad 15 ausgebildet, an der zweiten Schwenkachse 6 durch ein dem ersten Scharnierarm 4 zugeordnetes Zahnrad 16 und eine an dem zweiten Scharnierarm 5 angeordnete Verzahnung 17 und an der dritten Schwenkachse 8 durch ein dem zweiten Scharnierarm 5 zugeordnetes Zahnrad 18 und ein dem starren Träger 9 zugeordnetes Zahnrad 20, die über einen Zahnriemen 19 miteinander verbunden sind. Es ist aber denkbar, dass in dem Getriebezug andere Mechanismen eingesetzt werden, beispielsweise nur Zahnriemen oder auch Ketten.

In der Schließstellung der Hecktür 2 ist das Mehrfachschamier 3 in dem Aufnahmeschacht 21 der Hecktür 2 angeordnet. Durch den bzw. die Aufnahmeschächte 21 kann die Steifigkeit der Hecktür 2 erhöht werden. Hierzu können zusätzliche Streben zwischen den Aufnahmeschächten 21 angebracht werden. Bevorzugt sollten die Streben am oberen Aufnahmeschacht an der Stelle angebracht werden, an der der starre Träger angeordnet ist, um auftretende Kräfte aufzunehmen. Die Aufnahmeschächte 21 werden also über die Streben miteinander verbunden und können daher die tragende Struktur der Hecktür 2 bilden. Alle wesentlichen Elemente, wie z.B. das Schloss bzw. der Schließmechanismus, werden dann an den Aufnahmeschächten 21 angebracht. Die an der Hecktür 1 auftretenden Kräfte werden durch die Aufnahmeschächte 21 und die die Aufnahmeschächte verbindenden Streben aufgenommen bzw. weitergeleitetet. Die sichtbare Außenhaut der Hecktür 2 stellt somit nur eine Hülle dar. Dadurch kann die Hecktür 2 in Leichtbauweise realisiert werden.

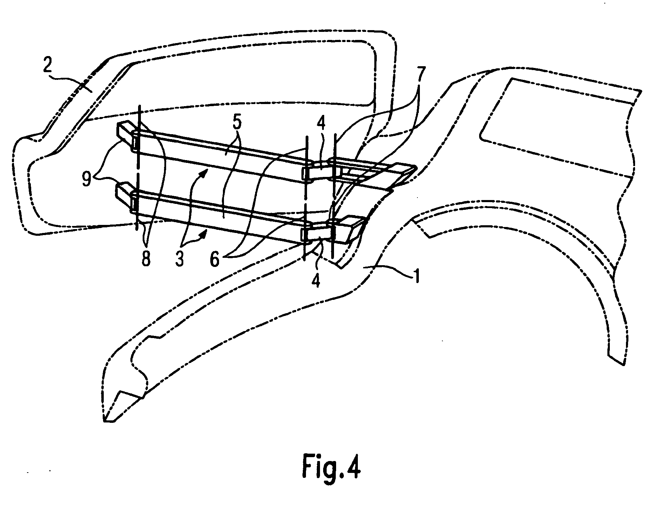

Fig. 4 zeigt eine perspektivische Darstellung des Heckbereichs eines erfindungsgemäßen Fahrzeugs mit einer daran angeordneten Hecktür 2. Sowohl die Hecktür 2 als auch die Fahrzeugkarosserie 1 sind in Fig. 4 nur schematisch dargestellt. Die Hecktür 2 ist dabei über zwei Mehrfachschamiere 3 mit der Fahrzeugkarosserie 1 verbunden. Die Mehrfachschamiere 3 sind identisch zueinander aufgebaut, wobei jedes der Mehrfachschamiere 3 drei Schwenkachsen 6, 7, 8 aufweist. Es wäre aber auch denkbar, die Mehrfachschamiere so auszubilden, dass in jedem Mehrfachschamier nur zwei Schwenkachsen vorgesehen sind. Die Aufnahmeschächte für die Mehrfachschamiere sind hier nicht dargestellt.

In der Fig. 4 wird die Hecktüre 2 gerade geöffnet und befindet sich in einer mittleren Öffnungsposition.

Die Länge der Scharnierarme 4, 5 ist so festgelegt, dass die Hecktür 2 in der Offenstellung mit seitlichem Abstand benachbart zu einer Seite des Fahrzeugs angeordnet ist. Dabei ist die Hecktüre 2 bis etwa zur Hälfte der Türbreite neben dem Fahrzeug angeordnet.

Das Mehrfachschamier 3 ist vorzugsweise so ausgebildet, dass der zweite Scharnierarm 5 länger als der erste Scharnierarm 4 und auch länger als der starre Träger 9 ist.

Die Länge des ersten Schamierarms 4 entspricht dabei mindestens der Tiefe der Hecktür 2. Der Abstand zwischen dem starren Träger 9 der Hecktür 2 und der Schwenkachse 7, bzw. der Verbindung des ersten Scharnierarms 4 mit der Fahrzeugkarosserie entspricht etwa 2/3 der Breite der Hecktür 2.

Ferner kann auch vorgesehen werden, dass benachbart zu der Fahrzeugkarosserie 1 ein Motor angeordnet ist, der mit dem Getriebezug bzw. mit einem der Getriebeelemente 10, 11, 12 in Verbindung steht, so dass die Hecktür 2 durch den Motor geöffnet und geschlossen werden kann.

Im Folgenden wird die Funktionsweise der Hecktür 2 bzw. des Mehrfachschamiers 3 anhand der Figuren 1 bis 4 näher beschrieben.

Wie bereits beschrieben, sind in Fig. 1 verschiedene Positionen dargestellt, die die Hecktür 2 einnehmen kann. In durchgezogenen Linien ist die Schließstellung dargestellt, in der die Hecktür 2 in einer Schließebene 22 liegt. In Strichpunkt-Linien ist die Offenstellung dargestellt, in der die Hecktür 2 in der Öffnungsebene 23 liegt. Durch die Hecktür 2 wird die Türebene 24 definiert, die in der Schließstellung der Hecktür 2 mit der Schließebene 22 übereinstimmt und die in der Offenstellung der Hecktür 2 mit der öffnungsebene 23 übereinstimmt. Beim Überführen der Hecktür 2 von der Schließstellung in die Offenstellung wird die Türebene 24 durch den Getriebezug auf einer vorbestimmten, stets gleichbleibenden Bewegungsbahn bewegt. Die Bewegungsbahnen der einzelnen Komponenten des Mehrfachschamiers 3, und damit die Bewegungsbahn der Türebene 24, werden durch die Übersetzungen der Getriebeelemente 10, 11, 12 des Getriebezugs eingestellt. Der Getriebezug ist dabei so ausgebildet, dass die Bewegungsbahn der Türebene 24 rotatorische und translatorische Komponenten aufweist.

Der Öffnungsvorgang der Hecktür 2 kann beispielsweise dadurch gestartet werden, dass ein Benutzer einen Türgriff betätigt und die Hecktür 2, und damit auch den starren Träger 9, nach außen zieht. Da alle Komponenten des Mehrfachschamiers 3 über den Getriebezug kinematisch miteinander verbunden sind, führt die Bewegung einer der Komponenten zur Bewegung aller anderen Komponenten in einer vorab festgelegten Weise und die Türebene 24 beschreibt die festgelegte Bewegungsbahn.

Die Bewegung des starren Trägers 9 wird also an dem Gelenk bzw. der Schwenkachse 8 über das zugeordnete Getriebeelement 12 auf den zweiten Scharnierarm übertragen. Die Bewegung des zweiten Schamierarms 5 wiederum wird über die Schwenkachse 6 und das zugeordnete Getriebeelement 11 auf den ersten Scharnierarm 4 übertragen, der dann entlang der Schwenkachse 7 und mithilfe des Getriebeelements 10 um die Fahrzeugkarosserie 1 schwenkt.

In der Schließstellung der Hecktür 2 bilden der erste Scharnierarm 4 und der zweite Scharnierarm 5 eine Gerade, der starre Träger 9 schließt mit der Verlängerung des zweiten Scharnierarms 5 einen Winkel γₒ von 90° ein. Nach Einleiten des Türöffnungsvorgangs, beispielsweise durch Betätigen eines Türgriffs oder eines automatischen Türöffners, wird die Hecktür 2 nach außen bewegt. Die Übersetzung des Getriebeelements 12 ist so ausgewählt, dass der starre Träger 9 so entlang der Schwenkachse 12 verschwenkt wird, dass der Winkel y, der zwischen der Verlängerung des zweiten Scharnierarms 5 und dem starren Träger 9 aufgespannt wird, abnimmt. Die Bewegung des starren Träger 9 wird über das Getriebeelement 12 auf den zweiten Scharnierarm 5 übertragen. Die Getriebeelemente 11, 12 sind vorzugsweise so ausgebildet, dass der zwischen dem ersten Scharnierarm 4 und dem zweiten Scharnierarm 5 aufgespannte Winkel β in dem Maße zunimmt, in dem der Winkel γ abnimmt. Die Bewegung des zweiten Scharnierarms 5 wird über das Getriebeelement 11 auf den ersten Scharnierarm 4 übertragen. Auch hier sind die Getriebeelemente 10, 11 wiederum so ausgebildet, dass der zwischen einer Verlängerung der Fahrzeugkarosserie 11 und dem ersten Scharnierarm 4 aufgespannte Winkel α in dem Maße zunimmt wie der Winkel β. Dies wird durch ein Verschwenken des ersten Schamierarms 4 an der Schwenkachse 7 ermöglicht.

Da die durch die Getriebeelemente 10, 11, 12 festgelegte Bewegungsbahn der Türebene 24 rotatorische und translatorische Komponenten aufweist, wird die Hecktür 2 beim Öffnen so bewegt, dass sie aus der Schließstellung, in der sie sich parallel zum Fahrzeugheck befindet, in eine Offenstellung geschwenkt wird, in der die Hecktür 2 im Wesentlichen parallel zu der entsprechenden Seitenwand der Fahrzeugkarosserie 1 angeordnet ist. Wie aus Fig. 1 ersichtlich, betragen die Winkel α und β in der Schließstellung der Hecktür 2 0°, der Winkel γₒ beträgt 90°. In der dargestellten Offenstellung betragen die Winkel α', β' etwa 85°, der Winkel γ' beträgt etwa 5°. Der Getriebezug ist also so ausgebildet, dass die Übersetzung an den Schwenkachsen 6, 7 den Wert 1 hat und an der Schwenkachse 8 den Wert -1 . Die Übersetzung zwischen dem starren Träger 9 der Hecktür 2 und dem zweiten Scharnierarm 5 hat also in Bezug auf die Übersetzung zwischen dem ersten Scharnierarm 4 und dem zweiten Scharnierarm 5 und die Übersetzung zwischen dem ersten Scharnierarm 4 und der Fahrzeugkarosserie 1 ein umgekehrte Vorzeichen, die Beträge der Übersetzungen sind identisch. Dadurch wird erreicht, dass die Winkel α und β beim Öffnen der Hecktür 2 zunehmen, währen der Winkel γ beim Öffnen der Hecktür abnimmt.

Es ist auch denkbar, dass die Übersetzung andere Werte annimmt, es muss aber darauf geachtet werden, dass die Übersetzung an der Schwenkachse 8, also der Getriebeelemente 12, ein umgekehrtes Vorzeichen zu den Übersetzungen an den Getriebeelementen 10 und 11 aufweist.

## Patentansprüche

1. Fahrzeug mit mindestens einer eine Türebene (24) definierenden Hecktür (2), die über mindestens einen Mehrfachschamier (3) mit mindestens drei zueinander versetzten Schwenkachsen (6, 7, 8) und mindestens zwei paarweise schwenkbar miteinander verbundenen Schamierarmen (4, 5), von denen ein erster Scharnierarm (4) schwenkbar mit der Fahrzeugkarosserie (1) und ein zweiter Scharnierarm (5) schwenkbar mit der Hecktür (2) verbunden ist, an der Fahrzeugkarosserie (1) angelenkt ist, wobei dem Mehrfachschamier (3) ein die Schamierbewegung der Scharnierarme (4, 5) in den Schwenkachsen (6, 7, 8) steuernder Getriebezug zugeordnet ist, wodurch die Türebene (24) bei der Überführung der Hecktür (2) aus einer Schließstellung, in der die Hecktür (2) eine Schließebene (22) aufspannt, in eine Offenstellung, in der die Hecktür (2) eine Öffnungsebene (23) aufspannt, auf einer vorbestimmten Bewegungsbahn bewegt wird, die Bewegungsbahn der Türebene (24) rotatorische und translatorische Komponenten aufweist und die Schließebene (22) mit der Öffnungsebene (23) einen Winkel im Bereich von 70° bis 110°, bevorzugt etwa 90°, einschließt.

2. Fahrzeug nach Anspruch 1, **dadurch gekennzeichnet, dass** die Länge der Scharnierarme (4, 5) so festgelegt ist, dass die Hecktür (2) in der Offenstellung mit seitlichem Abstand benachbart zu einer Seite des Fahrzeugs angeordnet ist.

3. Fahrzeug nach einem der Ansprüche 1 oder 2, **dadurch gekennzeichnet, dass** die Hecktür (2) in der Offenstellung etwa bis zur Hälfte der Türbreite neben dem Fahrzeug angeordnet ist.

4. Fahrzeug nach einem der Ansprüche 1 bis 3, **dadurch gekennzeichnet, dass** der erste Scharnierarm (4) an einer ersten Schwenkachse (7) mit der Fahrzeugkarosserie (1) verbunden ist und die Länge des ersten Scharnierarms (4) mindestens der Tiefe der Hecktür (2) entspricht.

5. Fahrzeug nach einem der Ansprüche 1 bis 4, **dadurch gekennzeichnet, dass** der zweite Scharnierarm (5) an einer Schwenkachse (8) mit einem starren Träger (9) der Hecktür (2) verbunden ist und der Abstand zwischen der Schwenkachse (8) und der Verbindung des ersten Schamierarms (4) mit der Fahrzeugkarosserie (1) etwa 2/3 der Breite der Hecktür (2) entspricht.

6. Fahrzeug nach einem der Ansprüche 1 bis 5, **dadurch gekennzeichnet, dass** der zweite Scharnierarm (5) länger ist als der erste Scharnierarm (4).

7. Fahrzeug nach einem der Ansprüche 1 bis 6. **dadurch gekennzeichnet, dass** der Getriebezug so ausgebildet ist, dass die Übersetzung zwischen dem zweiten Scharnierarm (5) und dem starren Träger (9) der Hecktür (2) in Bezug auf die Übersetzung zwischen der Fahrzeugkarosserie (1) und dem ersten Scharnierarm (4) und in Bezug auf die Übersetzung zwischen dem ersten Scharnierarm (4) und dem zweiten Scharnierarm (5) negativ ist.

8. Fahrzeug nach einem der Ansprüche 1 bis 7, **dadurch gekennzeichnet, dass** der Getriebezug so ausgebildet ist, dass die Übersetzung zwischen der Fahrzeugkarosserie (1) und dem ersten Scharnierarm (4) genau der Übersetzung zwischen dem ersten Scharnierarm (4) und dem zweiten Scharnierarm (5) und genau dem Betrag der Übersetzung zwischen dem zweiten Scharnierarm (5) und dem starren Träger (9) der Hecktür (2) entspricht.

9. Fahrzeug nach einem der Ansprüche 1 bis 8, **dadurch gekennzeichnet, dass** in der Offenstellung der Hecktür (2) ein zwischen der Fahrzeugkarosserie (1) und dem ersten Scharnierarm (4) aufgespannter Winkel α' etwa 90° beträgt, ein zwischen der Verlängerung des ersten Scharnierarms (4) und dem zweiten Scharnierarm (5) aufgespannter Winkel β' etwa 90° beträgt und ein zwischen der Verlängerung des zweiten Schamierarms (5) und dem starren Träger (9) der Hecktür (2) aufgespannter Winkel γ' etwa 0° beträgt.

10. Fahrzeug nach einem der Ansprüche 1 bis 9, **dadurch gekennzeichnet, dass** der Getriebezug durch Zahnriemenverbindungen ausgebildet ist.

11. Fahrzeug nach einem der Ansprüche 1 bis 9, **dadurch gekennzeichnet, dass** der Getriebezug Zahnradverbindungen und Zahnriemenverbindungen aufweist.

12. Fahrzeug nach einem der Ansprüche 1 bis 11, **dadurch gekennzeichnet, dass** die Hecktür (2) über zwei Mehrfachschamiere (3) mit zugeordneten Getriebezügen mit der Fahrzeugkarosserie (1) verbunden ist.

13. Fahrzeug nach einem der Ansprüche 1 bis 12, **dadurch gekennzeichnet, dass** dem mindestens einen Mehrfachschamier (3) mit dem Getriebezug mindestens ein Motor zugeordnet ist.

## Claims

1. Vehicle with at least one tailgate (2) defining a door plane (24) which is attached to the vehicle body (1) in a jointed arrangement by means of at least one multiple hinge (3) with at least three pivot axes (6, 7, 8) offset from one another and at least two hinge arms (4, 5) mutually pivotable in a paired arrangement, of which a first hinge arm (4) is connected so that it can be pivoted on the vehicle body (1) and a second hinge arm (5) is connected so that it can be pivoted on the tailgate (2), and a gear train controlling the hinge movement of the hinge arms (4, 5) about the pivot axes (6, 7, 8) co-operates with the multiple hinge (3), as a result of which the door plane (24) is moved on a predefined travel path as the tailgate (2) is moved from a closed position in which the tailgate (2) spans a closure plane (22) into an open position in which the tailgate (2) spans an opening plane (23), which travel path of the door plane (24) includes rotary and translational components and the closed plane (22) subtends an angle in the range of 70° to 110°, preferably approximately 90°, with the opening plane (23).

2. Vehicle as claimed in claim 1, **characterised in that** the length of the hinge arms (4, 5) is fixed so that the tailgate (2) is disposed at a lateral distance adjacent to one side of the vehicle in the open position.

3. Vehicle as claimed in one of claims 1 or 2, **characterised in that** the tailgate (2) is disposed next to the vehicle by approximately up to half of the door width in the open position.

4. Vehicle as claimed in one of claims 1 to 3, **characterised in that** the first hinge arm (4) is connected to the vehicle body (1) on a first pivot axis (7) and the length of the first hinge arm (4) corresponds to at least the depth of the tailgate (2).

5. Vehicle as claimed in one of claims 1 to 4, **characterised in that** the second hinge arm (5) is connected to a rigid support (9) of the tailgate (2) on a pivot axis (8) and the distance between the pivot axis (8) and the connection of the first hinge arm (4) to the vehicle body (1) corresponds to approximately 2/3 of the width of the tailgate (2).

6. Vehicle as claimed in one of claims 1 to 5, **characterised in that** the second hinge arm (5) is longer than the first hinge arm (4).

7. Vehicle as claimed in one of claims 1 to 6, **characterised in that** the gear train is designed so that the gear ratio between the second hinge arm (5) and the rigid support (9) of the tailgate (2) to the gear ratio between the vehicle body (1) and the first hinge arm (4) and to the gear ratio between the first hinge arm (4) and the second hinge arm (5) is negative.

8. Vehicle as claimed in one of claims 1 to 7, **characterised in that** the gear train is designed so that the gear ratio between the vehicle body (1) and the first hinge arm (4) corresponds exactly to the gear ratio between the first hinge arm (4) and the second hinge arm (5) and exactly to the amount of the gear ratio between the second hinge arm (5) and the rigid support (9) of the tailgate (2).

9. Vehicle as claimed in one of claims 1 to 8, **characterised in that** when the tailgate (2) is in the open position, an angle α' subtended by the vehicle body (1) and the first hinge arm (4) is approximately 90°, an angle β' subtended by the extension of the first hinge arm (4) and the second hinge arm (5) is approximately 90° and an angle γ' subtended by the extension of the second hinge arm (5) and the rigid support (9) of the tailgate (2) is approximately 0°.

10. Vehicle as claimed in one of claims 1 to 9, **characterised in that** the gear train is provided in the form of toothed belt connections.

11. Vehicle as claimed in one of claims 1 to 9, **characterised in that** the gear train has toothed wheel connections and toothed belt connections.

12. Vehicle as claimed in one of claims 1 to 11, **characterised in that** the tailgate (2) is connected to the vehicle body (1) via two multiple hinges (3) with co-operating gear trains.

13. Vehicle as claimed in one of claims 1 to 12, **characterised in that** at least one motor co-operates with the at least one multiple hinge (3) with the gear train.

## Revendications

1. Véhicule avec au moins un hayon (2) qui définit un plan de porte (24) et qui est articulé à la carrosserie de véhicule (1) par l'intermédiaire d'au moins une charnière multiple (3) avec au moins trois pivots (6, 7, 8) décalés et au moins deux bras de charnière (4, 5) reliés de manière pivotante par paires, un premier bras (4) étant relié de manière pivotante à la carrosserie (1) tandis qu'un second bras (5) est relié de manière pivotante au hayon (2), étant précisé qu'il est prévu, associé à la charnière multiple (3), un train d'engrenages qui commande le mouvement de charnière des bras (4, 5) dans les pivots (6, 7, 8), moyennant quoi le plan de porte (24), lorsque le hayon (2) passe d'une position fermée dans laquelle il couvre un plan de fermeture (22) à une position ouverte dans laquelle il couvre un plan d'ouverture (23), est déplacé sur une trajectoire prédéfinie, ladite trajectoire du plan de porte (24) présente des composantes de rotation et de translation, et le plan de fermeture (22) définit avec le plan d'ouverture (23) un angle situé dans la plage de 70° à 110°, de préférence d'environ 90°.

2. Véhicule selon la revendication 1, **caractérisé en ce que** la longueur des bras de charnière (4, 5) est fixée de telle sorte que le hayon (2), en position ouverte, soit disposé près d'un côté du véhicule, avec un écartement latéral.

3. Véhicule selon l'une des revendications 1 ou 2, **caractérisé en ce que** le hayon (2), en position ouverte, est disposé près du véhicule à peu près jusqu'à la moitié de la largeur de porte.

4. Véhicule selon l'une des revendications 1 à 3, **caractérisé en ce que** le premier bras de charnière (4) est relié à la carrosserie de véhicule (1) au niveau d'un premier pivot (7), et la longueur dudit premier bras (4) correspond au moins à la profondeur du hayon (2).

5. Véhicule selon l'une des revendications 1 à 4, **caractérisé en ce que** le second bras de charnière (5) est relié au support rigide (9) du hayon (2) au niveau d'un pivot (8), et l'écartement entre le pivot (8) et la liaison du bras (4) avec la carrosserie de véhicule (1) correspond à peu près à 2/3 de la largeur du hayon (2).

6. Véhicule selon l'une des revendications 1 à 5, **caractérisé en ce que** le second bras de charnière (5) est plus long que le second bras de charnière (4).

7. Véhicule selon l'une des revendications 1 à 6, **caractérisé en ce que** le train d'engrenages est conçu de telle sorte que le rapport de transmission entre le second bras de charnière (5) et le support rigide (9) du hayon (2) par rapport au rapport de transmission entre la carrosserie de véhicule (1) et le premier bras de charnière (4) et par rapport au rapport de transmission entre le premier bras (4) et le second bras (5) soit négatif.

8. Véhicule selon l'une des revendications 1 à 7, **caractérisé en ce que** le train d'engrenages est conçu de telle sorte que le rapport de transmission entre la carrosserie (1) et le premier bras de charnière (4) corresponde exactement au rapport de transmission entre le premier bras (4) et le second bras (5), et exactement à la valeur du rapport de transmission entre le second bras (5) et le support rigide (9) du hayon (2).

9. Véhicule selon l'une des revendications 1 à 8, **caractérisé en ce que** dans la position ouverte du hayon (2), un angle α' défini entre la carrosserie de véhicule (1) et le premier bras de charnière (4) est d'environ 90°, un angle P' défini entre le prolongement du premier bras de charnière (4) et le second bras (5) est d'environ 90°, et un angle γ' défini entre le prolongement du second bras (5) et le support rigide (9) du hayon (2) est d'environ 0°.

10. Véhicule selon l'une des revendications 1 à 9, **caractérisé en ce que** le train d'engrenages est formé par des liaisons par courroie dentée.

11. Véhicule selon l'une des revendications 1 à 9, **caractérisé en ce que** le train d'engrenages comporte des liaisons par pignon et des liaisons par courroie dentée.

12. Véhicule selon l'une des revendications 1 à 11, **caractérisé en ce que** le hayon (2) est relié à la carrosserie de véhicule (1) par l'intermédiaire de deux charnières multiples (3) avec des trains d'engrenages associés.

13. Véhicule selon l'une des revendications 1 à 12, **caractérisé en ce qu'**au moins un moteur est associé à ladite charnière multiple (3) pourvue du train d'engrenages.
